# EUROPEAN PATENT SPECIFICATION

(11) **EP 2 013 259 B1**
(45) Date of publication and mention of the grant of the patent: **10.06.2020**
(21) Application number: 07755035.8
(22) Date of filing: 05.04.2007
(51) Int. Cl.: C08G 59/18, C08J 5/24

(54) **ONE-PART UV AND ABRASION RESISTANT PIGMENTED SURFACING FILM COMPOSITION FOR PREPREGS AND METHOD FOR ITS PREPARATION**
EINTEILIGE UV-BESTÄNDIGE UND ABRIEBFESTE PIGMENTIERTE BESCHICHTUNGSFOLIENZUSAMMENSETZUNG FÜR PREPREGS UND VERAHREN ZU IHRER HERSTELLUNG
FILM DE REVÊTEMENT COMPOSITE EN UN COMPOSANT RÉSISTANT À LA LUMIÊRE UV ET À L'ABRASION ET SON PROCÉDÉ DE PRÉPARATION

(30) Priority: 25.04.2006 US 794653 P
(43) Date of publication of application: 14.01.2009
(73) Proprietor: CYTEC TECHNOLOGY CORP., Wilmington, Delaware 19801 (US)
(72) Inventor: KOHLI, Dalip, Kumar, Churchville, MD 21028 (US)
(74) Representative: Vande Gucht, Anne
(86) International application number: PCT/US2007/008625
(87) International publication number: WO 2007/127032

(56) References cited:
- EP-A- 0 092 336
- US-A- 5 073 595
- US-A1- 2004 039 120
- DATABASE WPI Week 2004 Derwent Publications Ltd., London, GB; AN 2004-403512 XP002454775 -& JP 2004 107416 A (SUMITOMO BAKELITE CO LTD) 8 April 2004 (2004-04-08)
- DATABASE WPI Week 1996 Derwent Publications Ltd., London, GB; AN 1996-205640 XP002454776 -& JP 08 073631 A (TORAY IND) 19 March 1996 (1996-03-19)

## Description

### BACKGROUND OF THE INVENTION

### FIELD OF THE INVENTION

The present invention relates to a surfacing film composition for composite structures having ultraviolet light and abrasion resistance. In preferred embodiments the invention relates to a paint and traditional surfacing film replacement comprising a cycloaliphatic epoxy resin system that can be co-cured with most amine cured epoxy and bismaleimide based composite prepreg systems. The surfacing film composition of the present invention utilizes a pre-reacted base cycloaliphatic epoxy resin combined with an amine curing agent and catalyst, hardened filler, a pigment and a flow control agent.

### DESCRIPTION OF THE RELATED ART

Fiber reinforced, polymer matrix laminated composite structures are widely used in a number of applications. For example, increasing amounts of composite structures are being used in high performance aerospace applications.

Most composite parts in the aerospace industry use epoxy resin based prepregs because of good combination of mechanical properties, wide service temperature range, and ease of part manufacture. The epoxy resins used for aerospace composite applications are generally aromatic backbone epoxy resins due to their superior mechanical properties. However, aromatic epoxy resin based composites are susceptible to degradation from ultraviolet light (UV) exposure due to aromatic epoxy being a good chromophore. To overcome these shortcomings, most composite applications apply paint to cover all exposed composite surfaces soon after de-molding the part. The drawbacks to using paints are their high labor cost, high maintenance cost, added weight and adverse environmental impacts due to organic solvents typically used in the Painting processes.

Also, to achieve the required surface quality of a composite structure for aerospace composite applications, prior to painting, a co-cured layer of surfacing film is routinely integrated into the structure during component manufacture. The surfacing film is added to the composite part mold onto which is layered the composite prepreg plies. The uncured system is then cured such that when the part is removed from the mold, the surfacing film leaves a smooth surface that does not require significant filling and sanding prior to paint application.

Surfacing films are used to improve surface quality of parts while reducing labor, time and cost. Epoxy based films are extensively used for composite surfacing applications. These films are designed to minimize time and labor needed to finish parts. However, with the current industry focus on both cost and weight reduction of aircraft structures, an alternate method of finishing composite structures is desired.

An additional aspect of aerospace composite manufacturing is that exposed surfaces require a highly smooth surface for aerodynamic purposes. Current surfacing films after co-curing with the prepreg system are sanded to remove mold release followed by application of filler. The filler is then cured and sanded repeatedly to provide a smooth surface. This is followed by application of a paint primer, sanding, reapplying paint primer, and then applying a finishing top coat of paint. This process involves a high amount of labor and requires refinishing on periodic basis.

Moreover, the current surfacing films are not designed to be UV resistant and after exposure to UV, show color change and/or surface degradation, i.e. chalking and loss of paint adhesion.

Efforts to improve the UV resistance of these aromatic epoxy based films by inclusion of UV absorbers and stabilizers have not been successful. Attempts have been made to modify surfacing films such as Surface Master® 905 sold by Cytec Engineered Materials Inc. of Tempe, AZ with antioxidants in the aromatic epoxy, but these did not lead to significant improvement in UV resistance.

Aliphatic epoxies have been used to improve resistance to UV exposure, but are sluggish in reactivity with latent amines and are not suitable for stable one part films for co-cure applications with structural prepreg systems. In addition, these low viscosity aliphatic epoxies are cured with aliphatic amines or anhydrides for paste and potting applications. Their low viscosity also makes them undesirable for surfacing films. Also, their low mechanical properties make them imprudent for aerospace applications. Aliphatic epoxy resins were not appreciated in the aerospace art for adaptation to a film due to (1) its low viscosity; (2) its not being taught as a potential for amine curing necessary to be compatible with standard prepreg systems, (3) its undesirable low hardness as a cured composite for aerospace; and (4) its not being taught as a potential for low temperature (250°F-350°F) curing.

Use of gel coats or other protective coatings such as paint have been the more effective way of protecting the surfacing film from UV exposure and abrasion. However, both gel coats and the paints require regular maintenance and are not considered permanent fixes. There has also been the development of pigmented PTFE based films that have a pressure sensitive adhesive backing such as 3M® Appliqué that have been considered as a paint replacement. These PTFE based films offer UV stability and ease of use with adhesive backing but have no drapability to function in contoured areas.

In addition, paints are additional weight added to an aerospace vehicle. However, the art has taught that the pigments used as colorants in ambient curing epoxy resins for flooring applications, are sprayed or coated on as a liquid, not films for co-curing into a composite part for aerospace applications.

US.A,5 073 595 discloses method to improve Tg and ductility of an epoxy resin composition cured product, whilst US,A,2004 039120 discloses process for producing a prepreg resin composition and EP,A,0 092 336 discloses adhesive compositions.

There is obviously a need for surfacing films that can be co-cured with an aromatic structural epoxy resin based prepreg, have the drape and handlability and offer abrasion and UV resistance.

The present invention overcomes the drawbacks of the prior art while providing a very cost effective alternative to paint and abrasion resistance solutions including films like appliqués.

### SUMMARY OF THE INVENTION

The present invention provides for a UV and abrasion resistant pigmented surfacing film composition that is capable of being co-cured with most amine cured epoxy and bismaleimide based resin prepreg systems. The present invention is a one-part UV and abrasion resistant pigmented surfacing film composition adapted for co-curing with amine cured composite prepreg systems from 82°C (180°F) to 177°C (350°F) and more preferably between 121°C (250°F) and 177°C (350°F). The present invention is expected to save weight, labor and money while eliminating the hazardous waste associated with paints and primers. A further advantage of the present invention is that it provides a porosity free surface ready for final use. The present invention is defined by claim 1. Further embodiments are the method for its preparation as defined in claims 4 and 5.

The surfacing film composition of the present invention uses a prereacted base cycloaliphatic epoxy resin. The base cycloaliphatic epoxy resin is pre-reacted with a chain extension agent such as bisphenol and a high molecular weight elastomer polymer such as carboxylated acrylonitrile-butadiene poloymer (NIPOL 1472) with a catalyst such as triphenyl phosphine (TPP) at 149°C (300°F) to uniquely chain link the base cycloaliphatic epoxy resin to form a high viscosity, film formable cycloaliphatic resin prereact. To the cycloaliphatic resin prereact is added the remaining materials to form the surfacing film composition of the present invention capable of low temperature curing with amine cured composite prepregs, to provide rigidity and hardness necessary for surfacing applications on composite aircraft parts.

The remaining materials needed to impart desired surfacing film properties are a latent amine based epoxy curing agent, an amine catalyst traditionally used in aerospace with aromatic epoxies, but not taught to be compatible for curing acid/anhydride curable aliphatic resins. This amine curing agent and catalyst provide the capability for the one-part 121°C - 149°C (250°F -300°F) cure temperature.

Also added to the resin composition is filler, which provides both smoothness (thus a surfacing film requiring no sanding) and abrasion resistance (comparable to the hardness of current aircraft paint systems).

There is no teaching in the literature that adding filler such as tabular aluminum oxide, which is traditionally used to increase thermal conductivity of epoxy resins, can also add abrasion resistance. Indeed, most fillers are taught to be soft so that they can be sanded to further smooth a surface and then are designed to be painted over, adding the desired abrasion resistance from the paint.

The present invention uniquely incorporates a tabular alumina oxide. When tabular alumina oxide, taught for thermal conductivity, is added for smoothness it is found to also provide abrasion resistance. The amount of tabular aluminum oxide used determines the hardness of the surface after cure of the surfacing film. While most forms of alumina oxide are soft when used as filler, tabular alumina oxide is found to be uniquely suitable to improve abrasion resistance of a final cured composite surfacing film.

Also added to the surfacing film composition is a pigment. The surfacing film composition of the present invention is unique in that it provides the final part color after cure thus eliminating the need for secondary applications of paint that may be sprayed on, or a gel coat that also may be sprayed on the composite part. Pigmenting a surfacing film that is UV resistant and abrasion resistant entirely replaces the need for an after cure paint. The surfacing film composition of the present invention is capable of co-curing simultaneously with the underlying composite resulting in significant part cost reduction due to reduction in manufacturing labor as well as repair costs when old paint is replaced.

Traditional flow control agents are also added to the extent necessary.

Therefore, a preferred embodiment of the present invention is a one-part UV and abrasion resistant pigmented surfacing film composition adapted for co-curing with a composite prepreg material using a film forming chain extended aliphatic backbone epoxy resin. This resin is formed through the pre-reaction of a cycloaliphatic epoxy resin with a bisphenol, high molecular weight elastomer such as NIPOL 1472 and triphenyl phosphine at 121°C to 149°C (250°F to 300°F), most preferably 149°C (300°F), to chain link the cycloaliphatic resin to form a viscous, film formable aliphatic resin capable of low temperature curing with an amine curing agent; to which is added at least one amine curing agent; at least one amine catalyst; at least one hard filler; at least one pigment; and a flow control agent; the system being adapted for co-curing with an amine curable composite from 82°C (180°F) to 177°C (350°F) and more preferably between 121°C and 177°C (250°F and 350°F).

A further preferred embodiment of the present invention is a pre-reacted cycloaliphatic epoxy resin for use with an amine curing agent to be co-cured with an aromatic epoxy based prepreg.

The present invention is capable of replacing paint and top coat finishes on cured composites.

### DETAILED DESCRIPTION OF THE PREFERRED EMBODIMENTS

The present invention is an aliphatic epoxy resin based surfacing film composition involving the pre-reaction of a base cycloaliphatic epoxy resin to increase viscosity. Cycloaliphatic epoxy resins are preferred due to their similar reactivity to aromatic epoxy resins. However, cycloaliphatic epoxy resins are far too low in viscosity for applicability as one part high viscosity, solid, surfacing film for composite surfacing applications. The viscosity of base cycloaliphatic epoxy resins varies between 50 to 2000 poise at room temperature. In contrast, most aromatic epoxy resins traditionally used for surfacing film compositions are 3000 poise to a solid at room temperature.

To increase the viscosity of the base cycloaliphatic epoxy resins to be film formable, they are pre-reacted with a chain extension agent such as a bisphenol and a high molecular weight elastomer polymer such as carboxylated acrylonitrile-butadiene copolymer (NIPOL) in the presence of a catalyst such as triphenyl phosphine (TPP) to form a cycloaliphatic resin prereact. The pre-reaction of the base cycloaliphatic epoxy resin with the chain extension agent and the high molecular weight elastomer polymer increases the viscosity of the cycloaliphatic resin prereact to an acceptable level for film forming purposes.

To the cycloaliphatic resin prereact is then added the remaining materials needed to impart desired surfacing film properties in order to complete preparation of the surfacing film composition of the present invention. These remaining materials added to the cycloaliphatic resin prereact are a latent amine based epoxy curing agent, filler for providing smoothness and abrasion resistance, and a pigment to allow paint replacement.

Preparation of the surfacing film composition of the present invention is a two step process: pre-reaction of the base cycloaliphatic epoxy resins to chain extend and then, incorporation of the remaining materials to impart desired surfacing film properties.

The base cycloaliphatic epoxy resins acceptable for the present invention include hydrogenated versions of bisphenol A diglycidyl ether or bisphenol F diglycidyl ether. The amount of base cycloaliphatic epoxy resin can vary from 50 parts to 150 parts by weight. In a preferred embodiment, the concentration of base cycloaliphatic epoxy resin is between 80 and 100 parts of the cycloaliphatic resin prereact.

Additional cycloaliphatic, or aliphatic, epoxy resins may be optionally added as modifiers to control crosslink density or viscosity. These additional cycloaliphatic, or aliphatic, epoxy resins include, alicyclic diepoxy carboxylate, diglycidylester of hexahydropthalic anhydride and diglycidyl ester of tetrahydropthalic anhydride supplied for example by Huntsman under the trade names of CY 179, CY 184, and CY 192-1, respectively. The amount of these additional cycloaliphatic, or aliphatic, epoxy resins can vary from 5 to not more than 50 parts by weight in the cycloaliphatic resin prereact.

The chain extension agent is a bisphenol, preferably bisphenol A. The amount of bisphenol can vary from 5 to 35 parts by weight in the cycloaliphatic resin prereact. In a preferred embodiment of the present invention, the amount of bisphenol is between 20 and 30 parts.

The high molecular weight elastomer polymer can be any one or more of various reactive or non-reactive polymers. The high molecular weight elastomer is used for increasing the viscosity and film forming properties of the base cycloaliphatic epoxy resins. Acceptable high molecular weight elastomer polymers include, but are not limited to, amine terminated poly tetrahydrofuran available from 3M® under the trade name Dynamer HC 1101, and various polyetheramines such as polyoxypropylene tramine supplied by Huntsman under the trade name Jeffamine T-5000. The high molecular weight polymer is a carboxylated acrylonitrile-butadiene polymer, for instance NIPOL 1472.

The high molecular weight elastomer polymer can vary in amount from 2 parts to 30 parts by weight of the cycloaliphatic resin prereact. In a preferred embodiment of the present invention, the amount of high molecular weight polymer such as carboxylated acrylonitrile-butadiene copolymer is between 7.5 and 15 parts by weight.

The catalyst used for the reaction of the base cycloaliphatic epoxy resin in the cycloaliphatic resin prereact during the pre-reaction with bisphenol is preferably a weak base catalyst. A preferred catalyst is triphenyl phosphine. The amount of catalyst varies from 0.05 to one part per hundred parts base cycloaliphatic epoxy resin by weight. In a preferred embodiment of the present invention, the amount of triphenyl phosphine catalyst is between 0.075 to 0.20 parts per hundred parts base cycloaliphatic epoxy resin by weight.

In order to complete the preparation of the final surfacing film composition of the present invention, the remaining materials to impart desired surfacing film properties are added. A latent amine based epoxy curing agent, an amine catalyst, filler, pigment and flow control agent are necessary for the present invention. In addition, additional novolac epoxies may also be added if desired.

A latent amine based epoxy curing agent is added to the cycloaliphatic resin prereact. A curing agent such as diamino diphenyl sulfone can be used as well as dicyandiamide and bisureas. As dicyandiamide and diaminodiphenyl sulfone are also acceptable amine catalysts they can be used as both the curing agent and catalyst for applications that require a high cure temperature and higher service temperature. Other suitable curing agents are blocked amines such as the Curezol family of curing agents including 2 MZ-Azine or2MA-OK supplied by Air Products and amine-epoxy adducts such as MY 24 and Ancamine 2014 supplied by Ajinomoto. The amount of these curing agents can vary from 2 parts to 30 parts by weight per 100 parts of cycloaliphatic resin prereact.

Amine catalysts known in the art for use in aromatic epoxy resin chemistry are incorporated due to similarity in reactivity of the chosen base cycloaliphatic epoxy resins to aromatic backbone based epoxy resins. The small amount of these catalysts used reduces the cure temperature of the surfacing film composition. Dicyandiamide (sold commercially by Air Products under the trade name DICY) is a particularly preferred amine curing agent, although other guanidine compounds may also be utilized.

Other amine catalysts that may also be used include one or more ureas, either alone or in combination with other types of catalysts. Suitable ureas include alkyl and aryl substituted ureas. Many such ureas are available commercially, for example, bisureas based on toluenediamine or methylene dianiline which are sold under the trade name AMICURE UR by Air Products. Other potential amine catalysts include amine-epoxy adducts such as Ancamine 2014, Lewis Acids such as BF₃, and hydrazides.

Fillers are also added to the cycloaliphatic resin prereact for abrasion resistance and smoothness of the final surfacing film composition. Acceptable fillers are amorphous silica to control thixotropy, ceramic microspheres such as Zeeospheres G-200 or W200 available from 3M® and aluminum oxide. The incorporation of the tabular form of aluminum oxide is preferred for its greater abrasion resistance properties. The particle size of these fillers can vary from 1 to 10 microns. The use of tabular aluminum oxide in surfacing films is unique as the literature only teaches the use of tabular aluminum oxide in epoxy resin based films to improve thermal conductivity of the films.

The amount of fillers can vary broadly from 0 to 600 parts by weight per 100 parts of cycloaliphatic resin prereact and depending upon the desired hardness of the cured surface. In the preferred form, the amount of fillers is dependant on the final surface hardness desired and is further illustrated in the examples below.

Pigments are also incorporated to accommodate use of the surfacing film composition as a paint replacement. A number of pigments compatible with epoxy resins are well known in the art and can be used. The selection of pigments or pigment packages is dictated by the final color desired. Traditional pigments such as red iron oxide, green chromium, carbon black, etc. may be incorporated.

Flow control agents such as amorphous silica may be incorporated into the mixture to improve flow control. The amount of flow control agent can vary from 1 part to 10 parts by weight per one hundred parts cycloaliphatic resin prereact. Preferably, from 3 parts to 6 parts.

Optionally, novolac epoxies such as DEN 439 from Dow Chemical may be added to increase crosslink density and lower the tack of the final surfacing film. Other suitable epoxy resins include cresol novolac epoxy resins such as ECN 1273, bisphenol novolac SU-8 and triglycidyl ether Tactix 742 supplied by Huntsman.

Preparation of the surfacing film of the present invention consists of weighing the required quantities of the base cycloaliphatic epoxy resin, the chain extension agent, the high molecular weight elastomer polymer (approximately 20% solution of this high molecular weight elastomer polymer in a methyl ethyl ketone solvent) into a mixing vessel equipped for heating and cooling. This mixture is stirred and heated to between 130°F and 150°F until the mixture becomes homogeneous at which point the pre-reaction catalyst triphenyl phosphine is added.

The pre-reaction mixture is then slowly heated to between 250°F and 300°F, the reaction temperature of the catalyst. During this heat up time, substantially all of the methyl ethyl ketone solvent is removed.

The pre-reaction is brought to completion by holding the temperature at between 250°F and 300°F for about one hour. During the heat up to 300°F and hold, the viscosity of pre-reaction mixture significantly increases. The viscosity of this cycloaliphatic resin prereact can vary significantly based on the amount of bisphenol and high molecular weight elastomer polymer used. The viscosity can range from a pourable liquid to a glassy solid at room temperature.

Additional solvent such as methyl ethyl ketone may be utilized to adjust the viscosity of the cycloaliphatic resin prereact to allow for the addition of the remaining materials to impart desired surfacing film properties, including latent amine based curing agent, amine catalyst, fillers, pigments, and flow control agents.

After the one hour hold, the cycloaliphatic resin prereact is cooled to below 200°F and the solvent such as methyl ethyl ketone is added slowly to lower the solids from 100% to 80%.

To the cycloaliphatic resin prereact, at about 80% solids, is added the fillers, pigments and flow control agents until dispersed into the cycloaliphatic resin prereact with a high speed shear mixer until thoroughly homogeneous. The temperature during this mixing should be maintained below 130°F to reduce solvent evaporation. The temperature can rise during the shearing of fillers, pigments and flow control agents, and the loss of solvent can be replaced by addition of additional solvent.

After the dispersion of fillers, pigments, and flow control agents, the surfacing film composition is cooled to below 130°F and the latent amine based epoxy curing agents and amine catalysts are added and dispersed without shearing. The temperature during this dispersion is kept below 130°F to prevent resin advancement by prematurely initiating the catalyst decomposition and reaction with the epoxy resins.

After the dispersion of latent amine based epoxy curing agents and amine catalysts, the completed surfacing film composition is deaired under vacuum to remove solvent as necessary to adjust the solids content for film coating.

The deaired surfacing film composition is then coated as a film on a silicone backed or other suitable release paper and dried to below 1% solvent level.

The surfacing film composition from the above procedure can be used for surfacing applications to improve composite part surface or can be combined with various expanded metal screens or foils for use as surfacing and lightning strike protection of aircraft composite parts.

The manufacture of composite parts incorporating the surfacing film composition of the present invention is carried out by applying the surfacing film composition onto to the tool followed by the lay up of fiber and epoxy prepreg according to the part manufacture's manufacturing processes. The part is then cured at a temperature between 180°F and 350°F depending upon the intended cure temperature of the prepreg system used.

During a cure under autoclave conditions, the composite parts generally are exposed to a pressure of 14 psi to 100 psi depending upon part design and structural density.

The surfacing film composition of the present invention is compatible for co-curing with all amine cured epoxy and bismaleimide resin prepreg systems. It is however not recommended that the surfacing film composition of the present invention be co-cured with an anhydride cured epoxy prepreg system.

The invention is now illustrated in a manner with reference to the following Examples.

### EXAMPLE 1

To 100 parts of Epalloy 5000 cycloaliphatic epoxy resins were added 30 parts of bisphenol A and 10 parts of NIPOL 1472 resin as 20% solution in methyl ethyl ketone (MEK). This mixture was heated to 130°F with stirring and then 0.1 part of triphenyl phosphine catalyst was added and the mixture heated to 300°F. After one hour hold at 300°F, the mixture was cooled to below 200°F and MEK was added to lower solids to 80%. This cycloaliphatic resin prereact was the used as the base for the surfacing film composition.

### EXAMPLE 2

To 100 parts by weight of the cycloaliphatic resin prereact of Example 1 were added, novolac epoxy DEN 439 (Dow Chemical) 20 parts, Zeeospheres G-200 (from 3M, Minneapolis) 90 parts, amorphous silica 8 parts. Solvent (MEK) was added as necessary to control the viscosity of above mix to about 80% solids. After mixing the above ingredients, curing agents such as dicyandiamide 8 parts and 2 parts of Omicure 52 (CVC Chemical) were added.

The above mixture was deaired to 80% solids by weight and then coated as a film at 0.035 psf film weight. The film was then dried to less than 1% by weight volatiles and a polyester random mat carrier was pressed into film under light pressure to just adhere the mat to the film.

### EXAMPLE 3

Same procedure as Example 2 was followed except aluminum oxide 140 parts was used as a filler to replace Zeeospheres.

### EXAMPLE 4

To 100 parts of the mixture of Example 3, a pigment package consisting of red iron oxide, green chromium and carbon black was added as in the amounts described in Example 6. The resulting film was then tested as described in Examples 5 to 7.

### EXAMPLE 5

### Testing for UV Resistance:

The formulation of Example 4 was coated at 0.035 psf and combined with a polyester mat carrier and expanded copper screen (Astroseal Inc.). The composition of Example 4 was also used to coat a Polyester peel ply. The coated peel ply was then used as the outer layer as shown in figure 1. Test panels for accelerated UV testing were the fabricated as follows (figure 1):

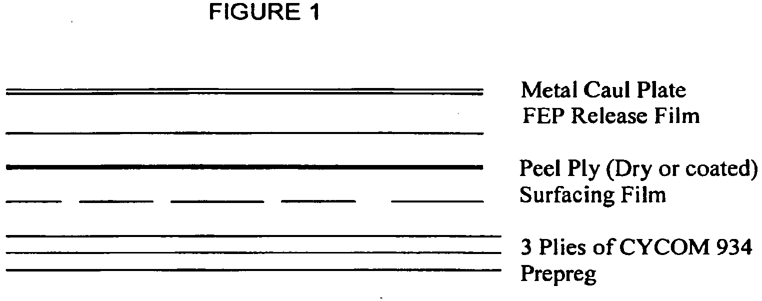

The test panels were then cured using a cure cycle consisting of a ramp rate of 3°F/min to 350°F, 40 psi with a hold of two hours at 350°F.

The cured panels were then cut into 3in by 3in specimens and were subjected to accelerated UV testing as follows. The peel ply was removed just prior to UV testing.

### Accelerated UV Testing:

The UV testing was conducted per ASTM G 154 test method with Xenon arc UV source. The test duration was 300 hours.

After exposure, the test samples were read for color change as compared to the unexposed control and examined for any surface degradation such as chalking or flaking.

For comparison, panels were made as discussed as above using FM 202 surfacing film and subjected to UV testing in a similar manner. The total color change test results are shown in Table 1 and Figure 2.

The test results showed that the surfacing film of the present invention with dry or coated peel ply had the least change in color after the 300 hour UV exposure.

**Table 1: Test Results/Accelerated UV Testing/ASTM G 154**

| **Formulation #** | **Formulation** | **Total Color Change (DE) after 300 hours** |
|---|---|---|
| 10560-52-2 A/Dry Peel Ply | **Epalloy 5000 (71) Bisphenol A (21) NIPOL 1472 (7)** DEN 439 (21) Epalloy 5000 (19) Zeeospheres (90) DICY (8) CA 152 (2) CabOsil (5) Red Iron Oxide (2.1) Chromium Green (14) Carbon Black (0.82) | 1.86 |
| 10560-52-2 A/52-2 resin coated Peel Ply | **Epalloy 5000 (71) Bisphenol A (21) NIPOL 1472 (7)** DEN 439 (21) Epalloy 5000 (19) Zeeospheres (90) DICY (8) CA 152 (2) CabOsil (5) Red Iron Oxide (2.1) Chromium Green (14) Carbon Black (0.82) | 1.33 |
| FM 202 Pigmented (control)/FM 202 coated peel ply | DER 331 (15) DEN 439 (85) Zeeospheres G-200 (75) DICY (3) CA 152 (5) CabOsil (7) Red Iron Oxide (2.1) Green Chromium (14) carbon black (0.82) | 3.50 |

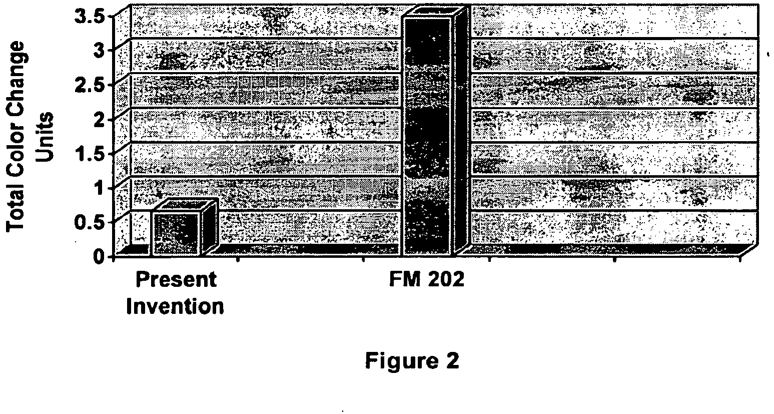

### EXAMPLE 6

### Color Matching to MIL-C-46168:

To the resin formulation of Example 3 is added a pigment package. The pigments included: Red iron oxide, green chromium oxide, and carbon black.

The complete formulation of the present invention with the pigment package is shown below:

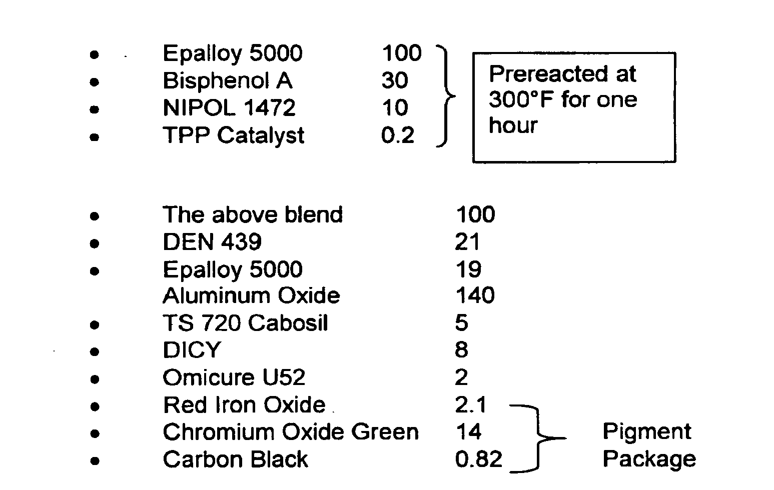

The above formulation with the pigments was coated as a film at 0.035 psf and was also used for coating of the polyester peel ply.

### Testing of Pigmented Surfacing Film of the Present Invention:

Samples of the surfacing film of this invention were prepared as shown in Example 4 at 0.035 psf weight with and without the 0.029 CXMC copper screen. The resin composition was also used for coating Polyester peel ply. The surfacing film was co-cured with various prepregs to check compatibility with various prepregs. The surfacing test panels were prepared as shown in Figure 1. Test panels were then tested for permeability/water tightness, abrasion testing and adhesion testing with the paint primer and the top coat. The test results are summarized in Table 2.

**Table 2: Testing on Pigmented Surfacing Film**

| **Test** | **Test Results** | **Requirement** |
|---|---|---|
| Surfacing Performance | No pinholes, pitting or mark-off | No pinholes or pitting |
| Permeability/Water Tightness Test | Passes gas and water permeability testing on sandwich panels | No leakage |
| Corrosion Testing/Scribe Test | No corrosion after 1000 h in salt spray | No corrosion |
| Electrical Tests/Resistivity | Resistivity < 10 milliohms | < 100 milliohms |
| Paint Adhesion | Passes paint adhesion testing | Good adhesion to paint |
| Taber Abrasion Test (ASTM D6040) | 250 cycles to wear through | 600 cycles |

### EXAMPLE 7

### Abrasion Resistance Studies:

In order to improve the abrasion resistance of the present invention, the filler in this experiment was changed from Zeeospheres G-200 to the aluminum oxide.

The film with 140 parts of aluminum oxide filler when tested per ASTM D6040 showed greater than 600 cycles for wear through and was better than the paint specification in MIL-C-41468.

The test results and the comparative data with FM 202 surfacing film are shown in Figure 3.

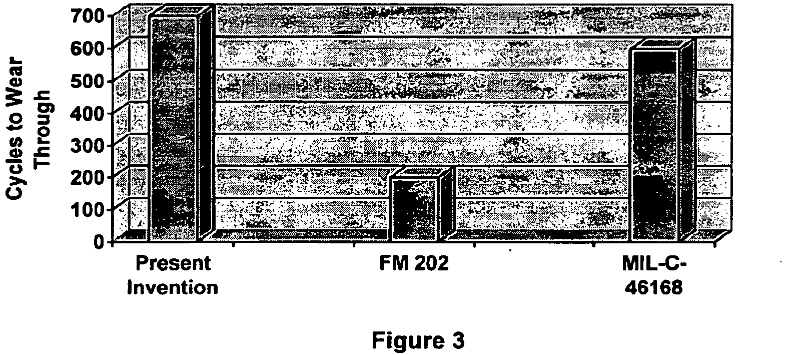

### EXAMPLE 8

### Environmental Testing:

Environment testing on the present invention was also performed including thermal analysis such as DSC, TMA, gel time and resistance to various aircraft fluids. The pigmented surfacing film of the present invention and coated peel ply were co-cured with CYCOM® 934 3K70P at 350°F for 2 hours. The peel ply was removed and cured panels were then exposed to various aircraft fluids. After the exposure was completed, the panel surface was examined for any color change or degradation. The data after various aircraft fluid exposures showed that the pigmented surfacing film surface was not affected by any of these fluids.

The test results are summarized in Table 3.

**Table 3: Effect of Various Environmental Conditions on Cured Pigmented Surfacing Film**

| **Test** | **Present Invention** | **FM 202** |
|---|---|---|
| 24 hours @ 280°F in Turbine oil | No Change | No Change |
| 7 days at 68°F in Hydraulic Fluid | No Change | No Change |
| 7 days at 68°F in JP-4 Jet Fuel | No Change | No Change |
| 7 days at 32°F in Deicing Fluid | No Change | No Change |
| 3 day water boil | No Change | No Change |
| 100 hour aging at 350°F in air | No Change | No Change |

## Claims

1. A one-part UV and abrasion resistant pigmented surfacing film composition comprising:
a. a cycloaliphatic resin prereact formed through the reaction of:
i. hydrogenated bisphenol A diglycidyl ether or hydrogenated bisphenol F diglycidyl ether ;
ii. bisphenol A;
iii. a high molecular weight elastomer polymer of carboxylated acrylonitrile-butadiene polymer; and
iv. a catalyst;
b. at least one latent amine based epoxy curing agent;
c. at least one amine catalyst;
d. at least one filler;
e. at least one pigment;
f. a flow control agent
adapted for co-curing with an amine curable aromatic epoxy or bismaleimide prepreg at a temperature of from 82°C (180°F) to 177°C (350°F).

2. The film composition of any of the preceding claims wherein the at least one filler is tabular aluminum oxide.

3. The film composition of any of the preceding claims wherein the flow control agent is amorphous silica.

4. A method for preparing the one-part UV and abrasion resistant pigmented surfacing film composition, adapted for co-curing with an amine curable aromatic epoxy or bismaleimide prepreg at a temperature of from 82°C (180°F) to 177°C (350°F), of any of the preceding claims said method comprising: a step of reacting a base cycloaliphatic epoxy resin, bisphenol A, a high molecular weight elastomer polymer of carboxylated acrylonitrile-butadiene polymer , and a catalyst to obtain a cycloaliphatic resin prereact; and a step of incorporating to said cycloaliphatic resin prereact at least one latent amine based epoxy curing agent, at least one amine catalyst, at least one filler, at least one pigment; and a flow control agent, wherein the base cycloaliphatic epoxy resin is hydrogenated bisphenol A diglycidyl ether or hydrogenated bisphenol F diglycidyl ether.

5. The method of claim 4, wherein the cycloaliphatic resin prereact is prepared at a temperature of 121°C - 149°C (250°F-300°F).

## Patentansprüche

1. Einteilige Zusammensetzung für UV- und abriebfesten pigmentierten Beschichtungsfilm, umfassend:
a. ein cycloaliphatisches Harz-Vorreaktionsprodukt, gebildet durch die Umsetzung von:
i. hydriertem Bisphenol-A-diglycidylether oder hydriertem Bisphenol-F-diglycidylether;
ii. Bisphenol A;
iii. einem Elastomerpolymer mit hohem Molekulargewicht aus carboxyliertem Acrylnitril-Butadien-Polymer; und
iv. einem Katalysator;
b. wenigstens ein Epoxidhärtungsmittel auf der Basis von latentem Amin;
c. wenigstens einen Aminkatalysator;
d. wenigstens einen Füllstoff;
e. wenigstens ein Pigment;
f. ein Verlaufmittel,
ausgelegt zum gemeinsamen Härten mit einem aminhärtbaren Aromatisches-Epoxid- oder Bismaleimid-Prepreg bei einer Temperatur von 82 °C (180 °F) bis 177 °C (350 °F).

2. Filmzusammensetzung gemäß einem der vorstehenden Ansprüche, wobei der wenigstens eine Füllstoff tafelförmiges Aluminiumoxid ist.

3. Filmzusammensetzung gemäß einem der vorstehenden Ansprüche, wobei das Verlaufmittel amorphes Siliciumdioxid ist.

4. Verfahren zur Herstellung der einteiligen Zusammensetzung für UV- und abriebfesten pigmentierten Beschichtungsfilm, ausgelegt zum gemeinsamen Härten mit einem aminhärtbaren Aromatisches-Epoxid- oder Bismaleimid-Prepreg bei einer Temperatur von 82 °C (180 °F) bis 177 °C (350 °F), gemäß einem der vorstehenden Ansprüche, wobei das Verfahren umfasst: einen Schritt des Umsetzens eines cycloaliphatischen Epoxid-Grundharzes, Bisphenol A, eines Elastomerpolymers mit hohem Molekulargewicht aus carboxyliertem Acrylnitril-Butadien-Polymer und eines Katalysators, um ein cycloaliphatisches Harz-Vorreaktionsprodukt zu erhalten; und einen Schritt des Einverleibens wenigstens eines Epoxidhärtungsmittels auf der Basis von latentem Amin, wenigstens eines Aminkatalysators, wenigstens eines Füllstoffs, wenigstens eines Pigments und eines Verlaufmittels in das cycloaliphatische Harz-Vorreaktionsprodukt; wobei das cycloaliphatische Epoxid-Grundharz hydrierter Bisphenol-A-diglycidylether oder hydrierter Bisphenol-F-diglycidylether ist.

5. Verfahren gemäß Anspruch 4, wobei das cycloaliphatische Harz-Vorreaktionsprodukt bei einer Temperatur von 121 °C bis 149 °C (250 °F bis 300 °F) hergestellt wird.

## Revendications

1. Composition de film de surfaçage pigmenté résistant aux UV et à l'abrasion à un seul composant comprenant :
a. un produit de pré-réaction de résine cycloaliphatique formé par la réaction de :
i. l'éther diglycidylique de bisphénol A hydrogéné ou l'éther diglycidylique de bisphénol F hydrogéné ;
ii. le bisphénol A ;
iii. un polymère élastomère de masse moléculaire élevée constitué de polymère d'acrylonitrile-butadiène carboxylé ; et
iv. un catalyseur ;
b. au moins un agent durcisseur d'époxy à base d'amine latente ;
c. au moins un catalyseur amine ;
d. au moins une charge ;
e. au moins un pigment ;
f. un agent d'ajustement de l'écoulement conçue pour être co-durcie avec un préimprégné en bismaléimide ou époxy aromatique durcissable par une amine à une température de 82 °C (180 °F) à 177 °C (350 °F).

2. Composition de film selon l'une quelconque des revendications précédentes dans laquelle l'au moins une charge est de l'oxyde d'aluminium tabulaire.

3. Composition de film selon l'une quelconque des revendications précédentes dans laquelle l'agent d'ajustement de l'écoulement est de la silice amorphe.

4. Procédé pour la préparation de la composition de film de surfaçage pigmenté résistant aux UV et à l'abrasion à un seul composant, conçue pour être co-durcie avec un préimprégné en bismaléimide ou époxy aromatique durcissable par une amine à une température de 82 °C (180 °F) à 177 °C (350 °F), selon l'une quelconque des revendications précédentes, ledit procédé comprenant : une étape consistant à faire réagir une résine époxy cycloaliphatique de base, du bisphénol A, un polymère élastomère de masse moléculaire élevée constitué de polymère d'acrylonitrile-butadiène carboxylé et un catalyseur pour obtenir un produit de pré-réaction de résine cycloaliphatique ; et une étape consistant à incorporer dans ledit produit de pré-réaction de résine cycloaliphatique au moins un agent durcisseur d'époxy à base d'amine latente, au moins un catalyseur amine, au moins une charge, au moins un pigment ; et un agent d'ajustement de l'écoulement, dans lequel la résine époxy cycloaliphatique de base est l'éther diglycidylique de bisphénol A hydrogéné ou l'éther diglycidylique de bisphénol F hydrogéné.

5. Procédé selon la revendication 4, dans lequel le produit de pré-réaction de résine cycloaliphatique est préparé à une température de 121 °C à 149 °C (250 °F à 300 °F) .
